# EUROPÄISCHE PATENTSCHRIFT

(11) **EP 0 800 339 B1**
(45) Veröffentlichungstag und Bekanntmachung des Hinweises auf die Patenterteilung: **19.05.1999**
(21) Anmeldenummer: 95943211.3
(22) Anmeldetag: 27.12.1995
(51) Int. Cl.: A01D 34/73

(54) **SCHNEIDEFORM**
BLADE SHAPE
FORME DE TRANCHANT

(30) Priorität: 30.12.1994 DE 4447274
(43) Veröffentlichungstag der Anmeldung: 15.10.1997
(73) Patentinhaber: Krämer, Ferdinand, 50259 Pulheim (DE)
(72) Erfinder: FERNANDEZ COX, Juan, Eduardo, D-52457 Aldenhoven (DE)
(86) Internationale Anmeldenummer: EP9505136
(87) Internationale Veröffentlichungsnummer: WO9620585

(56) Entgegenhaltungen:
- CA-A- 2 071 627
- FR-A- 2 601 221
- FR-E- 94 717
- US-A- 3 214 896
- US-A- 3 382 654
- US-A- 3 557 538
- US-A- 3 584 668
- US-A- 4 295 324

## Beschreibung

Die Erfindung bezieht sich auf eine Schneideform (Schneidegeometrie) gemäß dem Oberbegriff des Hauptanspruches.

Sei es bei auswechselbaren Klingen oder Messerbalken für einen Sichelmäher, kommt jeder Schneide eine sehr begrenzte Einsatzdauer zu, weil die scharfe Schneidekante beim Auftreffen auf ein Hindernis sehr darunter leidet. Mit fortschreitendem Verschleiß wird das Schnittgut nicht mehr geschnitten, sondern eher abgeschlagen.

Sodann muß ein Demontieren zum Nachschleifen oder Umsetzen erfolgen, um dann neu zu montieren. Der Praktiker hat Erfahrung, wie zeitraubend ein häufiges Wechseln der Schneidkörper ist.

Durch die DE-PS 221 144 ist eine Schneideform für auswechselbare Klingen für Mähwerke bekannt geworden (vgl. Fig. 1 bis 4), bei der eine Mehrzahl von nebeneinander parallel liegenden an der Unterseite befindlichen, zur Schneide im Winkel angeordneten Rillen vorgesehen sind, wodurch eine sägeartige Wirkung beim Gebrauch herbeigeführt wird.

Die Schneidekante soll durch den Verschleiß, die in Fig. 4 dargestellte sägeartige Gestalt annehmen, so daß ein Nachschleifen nicht notwendig ist. D.h. die Abnützung des dünnen Materials im Bereich der Einkerbungen lassen eine Art Sägezähne entstehen, die als erste das Erntegut packen bzw. durchschneiden. Auch wenn hier von der Schneide gesprochen wird, ist doch eine Säge gemeint. Die Nachteile einer Säge sind ja bekannt: bei frischem grünem Material sind die Zähne bald mit Grün zugedeckt, es können auch Verformungen vorkommen.

Die US-PS 3 382 654 zeigt einen aus Kunststoff gefertigten Messerbalken für Sichelmäher, in den an der Schneidkante - in Ausnehmungen - Kunststoffteile von geringerer Verschleißresistenz eingesetzt sind. Diese Einsätze sind jedoch durchgehend bzw. deren Ausnehmungen lassen im Unterschied zum Anmeldungsgegenstand keine geringe Materialstärke übrig.

Die Schneidekante soll hier durch die Abnutzung der Kunststoffteile von geringerer Verschleißresistenz eine Wellenform wie eine Säge (saw-tooth effect) erreichen. Die Nachteile einer Säge beim Grünzeug wurden oben dargestellt. Es ist noch anzumerken, daß die Erfindung auch nicht berücksichtigt, daß die vorgesehenen Verschleißteile sehr schnell keine Schärfe mehr besitzen. Zuletzt schneidet, was noch scharf ist, vorne, an der exponierten Stelle. Außerdem ist der Fertigungsaufwand größer als beim Anmeldungsgegenstand.

Der Erfindung liegt daher die Aufgabe zugrunde, die Schneidkante von Sichelmesserbalken bei einfacher Fertigung verschleißresistenter auszugestalten, wobei gleichzeitig die Schnittleistung erhöht wird.

Diese Aufgabe wird durch die kennzeichnenden Merkmale des Patentanspruchs gelöst.

Bei der neuen Erfindung wirkt das volle Material als Schutz für die dazwischen liegende Schärfe (dünnes Material der Ausnehmungen). Die Querstellung zur Schneide - also nicht im Winkel - möchte bewußt vermeiden, daß sägeartige Spitzen entstehen. Die Vorgesehene Schneidefläche (Ausnehmungen) bleibt scharf durch den Schutz - links und rechts - von vollem Material.

Es sind Ausnehmungen - keine Rillen - die immer eine konstante Materialstärke hinterlassen, um die Schärfe in der ganzen Breite optimal auszubilden (siehe Zeichnung).

Die Ausnehmungen befinden sich in der Messeroberseite, wodurch das Nachrutschen von Gras entlang der Schneide verhindert wird. Das Gras lehnt sich auf die Messeroberseite an und wird durch die Erhebungen festgehalten, was den Schneidevorgang, auch bei mittlerem Radius des Messers, erleichtert und die Schittleistung bedeutend erhöht.

Erfindungsgemäß wird ferner erreicht, daß die kinetische Energie von rotierenden Elementen (durch das o.g. Festhalten vom Schnittgut) in hohem Maße an das abgetrennte Schnittgut zu dessen Förderung in Richtung Auswurfende weitergegeben wird. Beim Grasmähen z. B. kann man feststellen, daß Gras viel weiter weggeworfen wird. Sowohl die gemähte Fläche als auch selbst die rotierenden Messer bleiben frei von zurückhaftenden Schnittresten.

Durch den Erfindungsgedanken wird das kleine scharfe Teilstück der Messerklinge durch das Vorhandensein von vollem Material zu beiden Seiten vor Verschleiß geschützt. Das scharfe Segment wiederholt sich dann mit kleinen Abständen entlang des ganzen Messers.

Es zeigen:

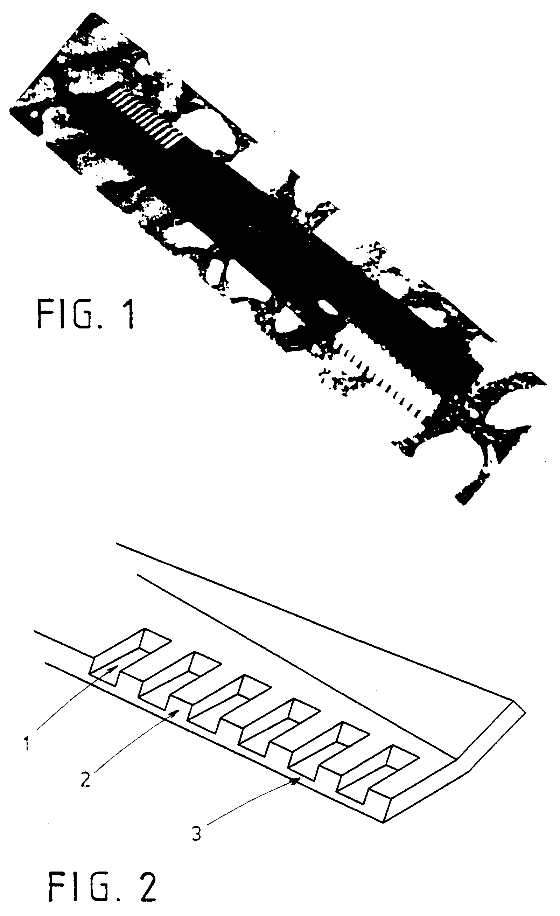

- Fig. 1: Beispiel vom Messerbalken für einen Sichelmäher mit einer Mehrzahl von Einkerbungen, hier weiß gefärbt;
- Fig. 2: Grundschema der Einkerbungen des Mähmessers.

Die Länge der Einkerbungen (1) beträgt beispielsweise maximal 30 mm. Zwischen den Einkerbungen (1) ist die volle Materialstärke (2) gegeben. Die Einkerbungen (1) lassen 1,2 mm bis 1,7 mm Material zur Schneidbildung (3) stehen.

## Patentansprüche

1. Schneideform für Messerbalken eines Sichelmähers oder für jede Art von auswechselbaren Mähwerksklingen von Rotationsmähwerken, **dadurch gekennzeichnet**, daß eine Mehrzahl von nebeneinander parallel liegenden Ausnehmungen quer zum Schneiderand das volle Material des Schneiderandes in der Messeroberseite regelmäßig unterbrechen, wobei die Ausnehmungen eine eine ununterbrochene Schneidkante bildende geringe Materialstärke in der Messerunterseite belassen, wodurch der Schneiderand in gleichmäßigen Abständen jeweils die volle Materialstärke beibehält oder eben verjüngt wird.

## Claims

1. Blade shape for cutter bar of a sickle mower or for any kind of replaceable mower blades on rotating mowing equipment, wherein a plurality of indentations positioned parallel alongside one another and transverse to the cutting edge regularly interrupt the full material of the cutting edge in the top part of the blade, with the indentations leaving a slight thickness of material in the lower part of the blade forming an uninterrupted cutting edge, by which the cutting surface either maintains the full thickness of material or is tapered at regular intervals.

## Revendications

1. Couteau pour barre de coupe de faucheuse ou pour tout type de lames amovibles de faucheuses rotatives, caractérisé par plusieurs entailles disposées parallèlement les unes par rapport aux autres et transversalement au bord tranchant, qui interrompent régulièrement l'épaisseur normale de la matière sur la partie supérieure du couteau tout en laissant apparaître sur sa partie inférieure une épaisseur plus fine, celle-ci formant un bord tranchant ininterrompu. La surface tranchante alterne ainsi à intervalles réguliers son épaisseur normale ou une épaisseur plus fine.
